(19) Europäisches Patentamt
European Patent Office
Office européen des brevets

(11) Publication number : 0 346 932 B1

(12) # EUROPEAN PATENT SPECIFICATION

(45) Date of publication of patent specification : **26.07.95 Bulletin 95/30**

(51) Int. Cl.$^6$ : **G01N 27/416**

(21) Application number : **89111007.4**

(22) Date of filing : **16.06.89**

(54) **Use of electrically conductive oil-in-water microemulsions based on perfluorinated compounds as catholytes in electrochemical processes.**

(30) Priority : **17.06.88 IT 2100588**

(43) Date of publication of application : **20.12.89 Bulletin 89/51**

(45) Publication of the grant of the patent : **26.07.95 Bulletin 95/30**

(84) Designated Contracting States : **AT BE CH DE ES FR GB GR IT LI NL SE**

(56) References cited :
**EP-A- 0 250 766**
**EP-A- 0 280 312**
**EP-A- 0 315 078**
**EP-A- 0 315 841**
**FR-A- 2 256 152**
**WORLD PATENTS INDEX LATEST, Derwent Publications Ltd., London, GB ; AN 85-084003 ; & JP-A-60 034 730**

(73) Proprietor : **AUSIMONT S.p.A.**
**31 Foro Buonaparte**
**I-20121 Milano (IT)**

(72) Inventor : **Chittofrati, Alba, Dr.**
**1, Fratelli Sangallo**
**I-20133 Milan (IT)**
Inventor : **Tentorio, Angelo, Dr.**
**42, via Crespi**
**I-28100 Novara (IT)**
Inventor : **Visca, Mario, Dr.**
**26/5 viale Michel**
**I-15100 Alessandria (IT)**

(74) Representative : **Barz, Peter, Dr. et al**
**Patentanwalt**
**Kaiserplatz 2**
**D-80803 München (DE)**

EP 0 346 932 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to the use of perfluorinated oil-in-water (o/w) microemulsions as catholytes in electrolytic processes. In particular, the perfluorinated oils are preferably of the perfluoropolyether type.

There is a need of having available electrochemical processes in which it is possible to obtain a high current density with the minimum cell voltage. Said need can be satisfied, for example, by reducing the hydrogen discharge overvoltage with the aid of catalyzing electrodes as cathodes.

A possible alternative thereto is a cathodic reaction which - with the anodic reaction being the same - occurs at a lower value of the reversible potential difference.

It is well known from electrochemical processes, in particular from voltametry, that a gas-saturated (for example $O_2$-saturated) saline solution exhibits certain limiting values of the reduction current of said gas as a function of the temperature and of the angular revolving speed ($\omega$) of the working electrode, which are determined by the (low) solubility of the gas in the electrolyte. Conversely, the $H_2$ evolution current is only a function of the potential and of the temperature, since the reduction of $H^+$ ions to $H_2$ is substantially independent of diffusion and, therefore, independent of $\omega$.

It has now surprisingly been found that by carring out voltametric processes in the o/w microemulsions described hereinbelow, having an electric conductance of preferably at least 1 milliS.cm$^{-1}$, the diffusion limiting current density of the gas which is being reduced at the cathode is much higher than the diffusion limiting current density of the same gas in an aqueous (saline) solution, when working under identical conditions as to temperature and rotational speed of the electrode.

A further surprising aspect of the present invention is that - with the current density and the anodic process being the same - the difference between the cathodic potential of a process in a microemulsion (for example the reduction of $O_2$ to $OH^-$) and the cathodic potential of a reference process in an aqueous solution (typically the $H_2$ evolution) is such that as compared to the electrolysis in aqueous phase the electrolysis in microemulsion allows to save energy.

In certain cases it is possible to observe in the microemulsion a considerable current, due to the reduction of oxygen, at cathode potentials at which no discharge of $H^+$ can be observed in the reference solution.

It is apparent that it is necessary to compare - under the same current conditions - the cathodic process of $O_2$ reduction in microemulsion with the $H_2$ evolution in aqueous solution, since reduction of $O_2$ in aqueous solutions can only occur at a low current density, limited by the low solubility of the gas and, consequently, by the diffusion process.

Thus, object of the present invention is an electrochemical process wherein a gaseous matter is reduced at the cathode and wherein oil-in-water (o/w) microemulsions having an electric conductance (due to ion transfer) of at least 1 millisiemens.cm$^{-1}$ are utilized as catholytes.

Preferably, microemulsions of perfluoropolyethers and/or perfluorocarbons in water having an electric conductance of at least 1 millisiemens.cm$^{-1}$ are used as catholytes for the cathodic reduction of oxygen.

Microemulsions employable according to the present invention are described in IT-A-20,910 A/86, 19,494 A/87, 19,495 A/87, as well as in the corresponding EP-A-250 766 and 280 312, the contents of which are incorporated herein.

Whenever used in the present invention, the term microemulsion also includes systems in which the molecular orientation in the interphase leads to the formation of optically an-isotropic systems, characterized by bi-refraction and probably consisting of oriented structures of the liquid crystal type.

The microemulsions used according to the present invention are mixtures which macroscopically consist of only one limpid or opalescent phase, which is indefinitely stable in the operative temperature range. Said mixtures preferably comprise:

a) an aqueous liquid optionally containing one or more electrolytes (e.g. salts like alkali and alkaline earth metal halides, nitrates, sulfates, phosphates, etc. and the corresponding acids);

b) a fluid containing one or more species of perfluoropolyether structure having perfluoroalkyl and/or functional end groups, with one or more functionalities selected from carboxyl, alcohol, polyoxyalkylene-OH, ester, amide, etc., and preferably hydrophilic functional groups, such as the carboxyl and polyoxyalkylene-OH groups, and particularly carboxylic groups;

c) a fluorinated surfactant preferably comprising (or consisting of) one or more species of perfluoropolyether structure; and/or

d) a hydrogenated (non-fluorinated) $C_{1-12}$, preferably $C_{1-6}$ alcohol and, optionally, a fluorinated (preferably $C_{1-12}$) alcohol (co-surfactant).

The microemulsions used herein may be optically isotropic or birefractive, are of the oil-in-water (o/w) type and are characterized in that they are conductive, their conductance being at least equal to 1 millisiemens.cm$^{-1}$.

Since the microemulsions used according to the present invention are of the o/w type, they must contain the (preferred) PFPE or the perfluorocarbon as "dispersed phase". Therefore, the aqueous phase should preferably be in excess (as to the volume) with respect to the perfluoropolyether (or perfluorocarbon) phase.

Perfluoropolyethers (PFPE) suitable for forming the microemulsions employed according to the present invention are:

a) PFPE having an average molecular weight ranging from 500 to 10,000, preferably from 600 to 6,000, having perfluoroalkyl end groups and belonging to one or more of the following classes:

1)

$$R_fO(\underset{\displaystyle CF_3}{\underset{|}{C}}F-CF_2O)_n(\underset{\displaystyle CF_3}{\underset{|}{C}}FO)_m(CF_2O)_pR'_f$$

wherein the perfluorooxyalkylene units are distributed statistically and $R_f$ and $R'_f$, the same or different from each other, are $-CF_3$, $C_2F_5$ or $-C_3F_7$, and m, n, p have such average values as to meet the above requirement as to average molecular weight;

2) $R_fO(CF_2CF_2O)_n(CF_2O)_mR'_f$, wherein the perfluorooxyalkylene units are statistically distributed, $R_f$ and $R'_f$, the same or different from each other, are $-CF_3$ or $-C_2F_5$, and m and n have such average values as to meet the above requirement as to average molecular weight;

3)

$$R_fO(CF_2CF_2O)_n(CF_2O)_m(\underset{\displaystyle CF_3}{\underset{|}{C}}FO)_p(\underset{\displaystyle CF_3}{\underset{|}{C}}F-CF_2O)_qR'_f$$

wherein the perfluorooxyalkylene units are statistically distributed, $R_f$ and $R'_f$, the same or different from each other, are $-CF_3$, $-C_2F_5$ or $-C_3F_7$, and m, n, p, q have such average values as to meet the above requirements as to average molecular weight;

4)

$$R_fO(\underset{\displaystyle CF_3}{\underset{|}{C}}F-CF_2O)_nR'_f$$

wherein $R_f$ and $R'_f$, the same or different from each other, are $-C_2F_5$ or $-C_3F_7$ and n has such an average value as to meet the above requirement as to average molecular weight;

5) $R_fO(CF_2CF_2O)_nR'_f$, wherein $R_f$ and $R'_f$, the same or different from each other, are $-CF_3$ or $-C_2F_5$ and n has such an average value as to meet the above requirement as to average molecular weight;

6) $R_fO(CF_2CF_2CF_2O)_nR'_f$, wherein $R_f$ and $R'_f$, the same or different from each other, are $-CF_3$, $-C_2F_5$ or $-C_3F_7$ and n has such an average value as to meet the above requirement as to average molecular weight;

7) PFPE having the structure of class 1 or 3, in which one of the two end groups $R_f$ or $R'_f$ contains one or two chlorine atoms, such PFPE being described in e.g. IT-A-20,406 A/88 of the applicant.

b) PFPE belonging to the above classes 1) to 7), having an average molecular weight ranging from 1,500 to 10,000, and preferably lower than 6,000, but containing on the average from 0.1 to 4, (e.g. 0.1 to 2) and preferably from 0.3 to 1, non-perfluoroalkyl end groups per polymer chain;

c) Perfluoropolyethers as e.g. described in IT-A-20,346 A/86 in the name of the applicant, having functional groups along the perfluoropolyether chain and end groups of the perfluoroalkyl or functional type.

As examples of non-perfluoroalkyl end groups and of functional groups in the chain there may be mentioned, for example, carboxylate, alcohol, polyoxyalkylene-OH, etc. groups.

The most suitable functional end groups and functional groups in the chain are the hydrophilic ones,and in particular carboxyl groups.

The functional end groups as well as the functional groups in the chain mentioned above can be linked to the perfluoropolyether chain through a -CFX-group in which X is F or $CF_3$, optionally followed by a linking group consisting of a divalent non-fluorinated radical of the alkylene or arylene type, containing up to 20 carbon

atoms, preferably containing 1 to 8 carbon atoms, according to the sequence: perfluoropolyether chain -CFX- non-fluorinated radical-functional group. Specific examples of suitable divalent non-fluorinated radicals are: methylene, ethylene, propylene, butylene, pentylene, hexylene, octylene, phenylene, biphenylene and naphthylene.

It is to be understood that perfluoropolyethers also employable according to the present invention are the ones of classes 1, 2 and 3, which contain peroxy bridges in the chain and have acid end groups, said PFPE being obtainable as crude products of the photo-oxidation process utilized for the synthesis of the above PFPE.

Perfluoropolyethers of class 1) are commercially available under the trade marks Fomblin® Y or Galden®; the ones of class 2) are marketed under the trade mark Fomblin® Z. All of said products are produced by Montedison S.p.A.

Commercially known products of class 4) are the Krytox® (Du Pont) PFPE. The products of class 5) are described in US-A-4,523,039 whereas the products of class 6) are known from EP-A-148,482.

The products of class 3) may be prepared according to US-A-3,665,041.

Other suitable perfluoropolyethers are the ones described by Lagow et al. in US-A-4,523,039 or in J. Am. Chem. Soc. 1985, 7, 1197-1201.

The fluorinated surfactants contained in the present microemulsions may be ionic or non-ionic. Examples of preferred surfactants are:

a) the salts of perfluoroalkylcarboxylic acids having 5 to 11 carbon atoms;
b) the salts of perfluorosulphonic acids having 5 to 11 carbon atoms;
c) the non-ionic surfactants described in EP-A-51526, consisting of a perfluoroalkylene chain and a hydrophilic polyoxyalkylene cap (head);
d) the salts of mono- and di-carboxylic acids derived from perfluoropolyethers;
e) the non-ionic surfactants consisting of a perfluoropolyether chain linked to a polyoxyalkylene chain;
f) the perfluorinated cationic surfactants or the surfactants derived from perfluoropolyethers having 1, 2 or 3 hydrophobic chains.

The preferred surfactants are those of the ionic type. Preferred cations in the salts mentioned above are $NH_4^+$ and the cations of alkali and alkaline earth metals, e.g. Na, K, Mg and Ca.

Furthermore, the system may contain one or more surfactants belonging to one of the following classes:

- hydrogenated alcohols having 1 to 12 carbon atoms (e.g. methanol, ethanol, propanol, butanol, pentanol, hexanol, octanol and decanol);
- alcohols comprising a perfluoropolyether chain,
- partially fluorinated alcohols.

The aqueous liquid may consist of water or of an aqueous solution of inorganic electrolytes (salts, acids or alkalis).

The present o/w microemulsions which are utilizable as catholytes for cathodic gas reduction reactions may also comprise, as dispersed oil phase, a perfluorocarbon in addition to or (preferably) instead of a perfluoropolyether, provided that such a microemulsion has a conductance of at least 1 millisiemens.cm$^{-1}$.

Perfluorocarbon microemulsions are well known in the art - see for example EP-A-51,526, the contents of which are incorporated herein. Perferred perfluorocarbons for use in the present invention contain from 5 to 15, particularly from 6 to 12, carbon atoms.

However, the use of conductive o/w emulsions, in which the oil is a perfluoropolyether, is particularly preferred.

The microemulsions to be used as catholytes may be prepared by mixing the individual components taken in any order.

According to the present invention there are used,as catholytes, o/w microemulsions having a conductivity of at least 1 millisiemens.cm$^{-1}$ with respect to the electrolytic reactions of any gas that can be reduced at the cathode. In the following examples oxygen has been used as gas and therefore all the voltametric tests reported hereinafter and the corresponding evaluations concern the cathodic reaction:

$$O_2+2H_2O+4e^- \rightarrow 4OH^-,$$

but it is apparent that said evaluations are to be considered as only illustrative.

From the voltametry in aqueous $(NH_4)_2SO_4$ solution, saturated with $O_2$, there were obtained the values of the diffusion limiting current of $O_2$-reduction as a function of temperature and angular rotational speed ($\omega$) of the working Pt electrode, as well as the values of the $H_2$ evolution current as a function of potential and temperature, since the $H^+$ reduction is substantially independent of the diffusion and therefore is independent of $\omega$.

Voltametric measurements were carried out by using, as catholyte, the microemulsion (ME), at the same temperatures and at the same $\omega$, determining:

1) $O_2$-diffusion limiting current density and increase thereof with respect to the diffusion current of the

same in an aqueous medium;

2) cathodic potential difference - with the current density being the same - between a cathodic process in microemulsion (typically $O_2$ reduction) and a reference cathodic process in aqueous solution (typically $H_2$ evolution).

The limiting current of $O_2$-reduction indicated in each example is always referred to a cathodic potential which is lower (by 200 mV) than the value at which $H_2$-evolution in the examined system starts.

In order to measure the current as a function of the applied potential a voltametry was conducted, using as catholytes various ME and as anolyte a concentrated aqueous solution of an inorganic electrolyte.

Voltametric measurements were carried out by means of a multipolarograph Amel® 472, in a 3-electrode cell:

- working electrode of the Pt rotating disc type, having a geometric surface area of 3.14 $mm^2$, immersed in the ME;
- Pt counter-electrode, immersed in an aqueous solution of $(NH_4)_2SO_4$ (3 moles/liter), separated from the ME by an agar-agar septum;
- reference calomel electrode (SCE) immersed in a saline bridge (KCl solution, 3 moles/l) with a Luggin capillary facing the working electrode surface.

All the cathodic potential values reported hereinbelow are referred to the SCE (standard calomel electrode). As working electrodes it is possible to use all of those which are generally utilized for the cathodic gas reduction, for example those made of Pt, Au or Ni. Platinum is particularly preferred.

In each test, about 60 ml of ME, at the desired temperature, were saturated with moist $O_2$ at atmospheric pressure.

Starting from the spontaneous potential of the system in the absence of current, a potential sweep-100 mV $s^{-1}$- was applied to the working cathode, and the circulating current was recorded as a function of the cathodic potential for different rotational speeds of the electrode.

In a concentrated aqueous solution of $(NH_4)_2SO_4$ (3 moles/l, corresponding to 396 g/l) at a pH of 5.3 and at a specific conductance of 172 milliS.$cm^{-1}$, $H_2$-evolution occurred at a cathodic potential of higher than -700 mV (SCE).

In this case the limiting current of $O_2$-reduction observed at 20°C was 2-3 $\mu$ A $mm^{-2}$ in the absence of stirring, and was 5 $\mu$ A $mm^{-2}$ with $\omega$ = 1,500 rpm; at 40°C, 3 $\mu$ A $mm^{-2}$ were obtained with $\omega$ = 0, and about 10 $\mu$ A $mm^{-2}$ were obtained with $\omega$ = 1,500 rpm.

At 60°C and without electrode rotation, the observed limiting current density was 30 $\mu$ A $mm^{-2}$.

As regards the comparison of the potentials at which the same cathodic current density is observed both in microemulsion and in electrolytic aqueous solution, said comparison was conducted at the same temperature and at a pH of the aqueous electrolyte solution as close as possible to the pH of an aqueous solution of the fluorinated surfactant utilized for preparing the microemulsion.

The following example is to be considered as merely illustrative but not limitative of the present invention.

EXAMPLE 1

The microemulsion sample was prepared by mixing 3.24 g of monocarboxylic acid having a perfluoropolyether structure and an average equivalent weight of 542, and 0.72 g of monocarboxylic acid having the same structure and an equivalent weight of 567, salified with 2 ml of an ammonia solution (10% by weight of $NH_3$), 7.20 g of perfluoropolyether having perfluoroalkyl end groups, belonging to class 1 and having an average molecular weight of 800, 1.44 g of an alcohol having a perfluoropolyether structure and an average molecular weight of 678, 75 ml of water and 0.2 ml of an aqueous solution of $KNO_3$ (0.1 moles/liter).

The ME thus obtained was slightly opalescent at room temperature and became fully limpid when heated to a temperature higher than 40°C.

It exhibited a conductance of 4.05 millisiemens.$cm^{-1}$, a neutral pH,and contained 14% by weight of substances with perfluoropolyether structure dispersed in $H_2O$.

From the voltametric diagrams obtained with this o/w ME, the following was determined:

- at 20°C, a limiting current density of $O_2$-reduction of 20 $\mu$A $mm^{-2}$ without stirring and equal to 55 $\mu$A $mm^{-2}$ at $\omega$= 1500 rpm, both values being about 10 times higher than the ones obtained in an aqueous electrolyte solution;
- at 40°C, 30 $\mu$A $mm^{-2}$ circulated in the absence of stirring and about 70 $\mu$A $mm^{-2}$ at $\omega$= 1500 rpm, these values being 10 and 7 times, respectively higher than the corresponding values measured in an aqueous solution.

To obtain a circulation of 50 $\mu$A $mm^{-2}$ at $\omega$ = 1500 rpm it was necessary to use, at 20°C, -580 mV instead of -750 mV required in an aqueous electrolyte solution under the same conditions, with a corresponding saving

of energy of slightly less than 0.01 W/mm$^2$.

## Claims

1. Electrochemical process wherein a gaseous substance is reduced at a cathode and wherein microemulsions of the oil-in-water (o/w) type are utilized as catholytes, said microemulsions having an electric conductance by ion transfer of at least 1 millisiemens.cm$^{-1}$.

2. Process according to claim 1, wherein the gaseous matter is oxygen.

3. Process according to any one of claims 1 and 2, wherein the cathode is made of a metal generally utilized in voltametric processes.

4. Process according to claim 3, wherein the cathode is made of Au, Pt or Ni.

5. Process according to any one of claims 1 to 4, wherein the (o/w) microemulsions having a conductance of at least 1 millisiemens.cm$^{-1}$ are composed of a liquid, limpid or opalescent, macroscopically single-phased matter obtainable by mixing:
   a) an aqueous liquid optionally containing one or more electrolytes;
   b) a perfluoropolyether fluid having perfluoroalkyl and/or functional end groups, with carboxyl, alcohol, polyoxyalkylene-OH, ester, amide etc. functionality, and preferably functional groups of the hydrophilic type;
   c) a fluorinated surfactant preferably having a perfluoropolyether structure; and/or
   d) a hydrogenated $C_{1-12}$ alcohol and, optionally, a (partially) fluorinated alcohol (co-surfactant).

6. Process according to claim 5, wherein the fluorinated surfactant is selected from one or more of the following salts:
   a) salts of perfluoroalkylcarboxylic acids having 5 to 11 carbon atoms;
   b) salts of perfluorosulphonic acids having 5 to 11 carbon atoms;
   c) salts of mono- and di-carboxylic acids derived from perfluoropolyethers.

7. Process according to claim 5, wherein the fluorinated surfactant is of the non-ionic type substituted by a perfluoroalkyl chain and by a hydrophilic polyoxyalkylene cap.

8. Process according to any one of claims 1 to 7, wherein the oil is or comprises a perfluorocarbon.

9. Process according to any one of claims 1 to 7, wherein the oil is or comprises one or more perfluoropolyethers selected from:
   a) PFPE having an average molecular weight of from 500 to 10,000 and preferably from 600 to 6,000, with perfluoroalkyl end groups, and belonging to one or more of the following classes:
   1)

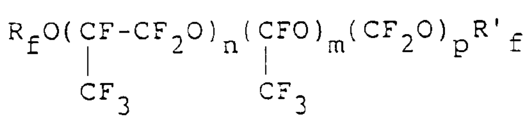

   wherein the perfluorooxyalkylene units are distributed statistically and $R_f$ and $R'_f$, the same or different form each other, are $-CF_3$, $-C_2F_5$ or $-C_3F_7$, and m, n, p have such average values as to meet the above requirement as to average molecular weight;
   2) $R_fO(CF_2CF_2O)_n(CF_2O)_mR'_f$, wherein the perfluorooxyalkylene units are statistically distributed, $R_f$ and $R'_f$, the same or different from each other, are $-CF_3$ or $-C_2F_5$, and m and n have such average values as to meet the above requirements as to average molecular weight;
   3)

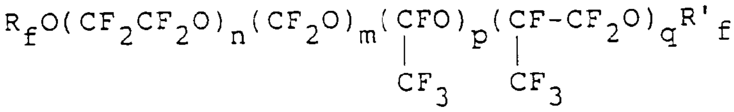

wherein the perfluorooxyalkylene units are statistically distributed, $R_f$ and $R'_f$, the same or different from each other, are $-CF_3$, $-C_2F_5$ or $-C_3F_7$, and m, n, p, q have such average values as to meet the above requirements as to average molecular weight;

4)

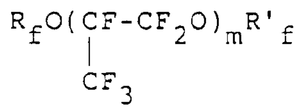

wherein $R_f$ and $R'_f$, the same or different from each other, are $-C_2F_5$ or $-C_3F_7$ and n has such an average value as to meet the above requirement as to average molecular weight;

5) $R_fO(CF_2CF_2O)_nR'_f$, wherein $R_f$ and $R'_f$, the same or different from each other, are $-CF_3$ or $-C_2F_5$, and n has such an average value as to meet the above requirement as to average molecular weight;

6) $R_fO(CF_2CF_2CF_2O)_nR'_f$, wherein $R_f$ and $R'_f$, the same or different from each other, are $-CF_3$, $-C_2F_5$ or $-C_3F_7$ and n has such an average value as to meet the above requirement as to average molecular weight;

7) PFPE having the structure of class 1 or of class 3, wherein one of the end groups $R_f$ and $R'_f$, contains one or two chlorine atoms;

b) PFPE belonging to the above classes 1) to 7) and having an average molecular weight of from 1,500 to 10,000 but containing on the average from 0.1 to 4 non-perfluoroalkyl end groups per polymer chain;

c) PFPE having functional groups along the perfluoropolyether chain and end groups of the perfluoroalkyl or functional type.

**Patentansprüche**

1. Elektrochemisches Verfahren, in dem eine gasförmige Substanz an einer Kathode reduziert wird und in dem Mikroemulsionen vom Öl-in-Wasser (O/W)-Typ als Katholyte verwendet werden, wobei die Mikroemulsionen eine elektrische Leitfähigkeit durch Ionentransfer von mindestens 1 Millisiemens.$cm^{-1}$ aufweisen.

2. Verfahren nach Anspruch 1, in dem das gasförmige Material Sauerstoff ist.

3. Verfahren nach irgendeinem der Ansprüche 1 und 2, in dem die Kathode aus einem Metall hergestellt ist, das allgemein in voltametrischen Verfahren eingesetzt wird.

4. Verfahren nach Anspruch 3, in dem die Kathode aus Au, Pt oder Ni hergestellt ist.

5. Verfahren nach irgendeinem der Ansprüche 1 bis 4, in dem die (O/W)-Mikroemulsionen mit einer Leitfähigkeit von mindestens 1 Millisiemens.$cm^{-1}$ aus einem flüssigen, klaren oder opaleszenten, makroskopisch einphasigen Material zusammengesetzt sind, das erhältlich ist durch Mischen:

   a) einer wäßrigen Flüssigkeit, die gegebenenfalls einen oder mehrere Elektrolyte enthält;

   b) eines Perfluorpolyether-Fluids mit Perfluoralkyl- und/oder funktionellen Endgruppen mit Carboxyl-, Alkohol-, Polyoxyalkylen-OH-, Ester-, Amid- usw. Funktionalität und vorzugsweise funktionellen Gruppen vom hydrophilen Typ;

   c) eines fluorierten Tensids mit vorzugsweise einer Perfluorpolyether-Struktur; und/oder

   d) eines hydrierten $C_{1-12}$-Alkohols und gegebenenfalls eines (teilweise) fluorierten Alkohols (Cotensids).

6. Verfahren nach Anspruch 5, in dem das fluorierte Tensid aus einem oder mehreren der folgenden Salze ausgewählt ist:

a) Salzen von Perfluoralkylcarbonsäuren mit 5 bis 11 Kohlenstoffatomen;
b) Salzen von Perfluorsulfonsäuren mit 5 bis 11 Kohlenstoffatomen;
c) Salzen von Mono- und Dicarbonsäuren, die von Perfluorpolyethern abgeleitet sind.

**7.** Verfahren nach Anspruch 5, in dem das fluorierte Tensid vom nicht-ionischen Typ, durch eine Perfluoralkyl-Kette und durch einen hydrophilen Polyoxyalkylen-Abschluß substituiert, ist.

**8.** Verfahren nach irgendeinem der Ansprüche 1 bis 7, in dem das Öl aus einem Perfluorkohlenstoff besteht oder diesen umfaßt.

**9.** Verfahren nach irgendeinem der Ansprüche 1 bis 7, in dem das Öl aus einem oder mehreren Perfluorpolyethern besteht oder diese umfaßt, die ausgewählt sind aus:
a) PFPE mit einem durchschnittlichen Molekulargewicht von 500 bis 10000 und vorzugsweise 600 bis 6000 mit Perfluoralkyl-Endgruppen, der zu einer oder mehreren der folgenden Klassen gehört:
1)

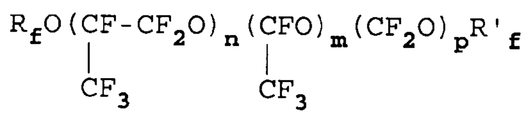

worin die Perfluoroxyalkylen-Einheiten statistisch verteilt sind und $R_f$ und $R'_f$, gleich oder verschieden voneinander, für $-CF_3$, $-C_2F_5$ oder $-C_3F_7$ stehen und m, n und p solche Durchschnittswerte aufweisen, daß sie die obige Anforderung hinsichtlich des durchschnittlichen Molekulargewichts erfüllen;
2) $R_fO(CF_2CF_2O)_n(CF_2O)_mR'_f$, worin die Perfluoroxyalkylen-Einheiten statistisch verteilt sind, $R_f$ und $R'_f$, gleich oder verschieden voneinander, für $-CF_3$ oder $-C_2F_5$ stehen und m und n solche Durchschnittswerte aufweisen, daß sie die obigen Anforderungen hinsichtlich des durchschnittlichen Molekulargewichts erfüllen;
3)

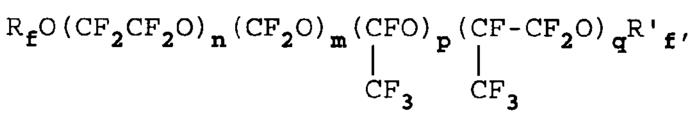

worin die Perfluoroxyalkylen-Einheiten statistisch verteilt sind, $R_f$ und $R'_f$, gleich oder verschieden voneinander, für $-CF_3$, $-C_2F_5$ oder $-C_3F_7$ stehen und m, n, p und q solche Durchschnittswerte aufweisen, daß sie die obigen Anforderungen hinsichtlich des durchschnittlichen Molekulargewichts erfüllen;
4)

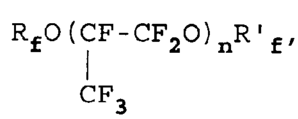

worin $R_f$ und $R'_f$, gleich oder verschieden voneinander, für $-C_2F_5$ oder $-C_3F_7$ stehen und n einen solchen Durchschnittswert aufweist, daß es die obige Anforderung hinsichtlich des durchschnittlichen Molekulargewichts erfüllt;
5) $R_fO(CF_2CF_2O)_nR'_f$, worin $R_f$ und $R'_f$, gleich oder verschieden voneinander, für $-CF_3$ oder $-C_2F_5$ stehen und n einen solchen Durchschnittswert aufweist, daß es die obige Anforderung hinsichtlich des durchschnittlichen Molekulargewichts erfüllt;
6) $R_fO(CF_2CF_2CF_2O)_nR'_f$, worin $R_f$ und $R'_f$, gleich oder verschieden voneinander, für $-CF_3$, $-C_2F_5$ oder $-C_3F_7$ stehen und n einen solchen Durchschnittswert aufweist, daß es die obige Anforderung hinsichtlich des durchschnittlichen Molekulargewichts erfüllt;
7) PFPE mit der Struktur von Klasse 1 oder von Klasse 3, worin eine der Endgruppen $R_f$ und $R'_f$ ein oder zwei Chloratome enthält;

b) PFPE, der zu den obigen Klassen 1) bis 7) gehört und ein durchschnittliches Molekulargewicht von 1500 bis 10000 aufweist, aber im Durchschnitt 0,1 bis 4 Nicht-Perfluoralkyl-Endgruppen pro Polymer-Kette enthält;

c) PFPE mit funktonellen Gruppen entlang der Perfluorpolyether-Kette und Endgruppen vom Perfluoralkyl- oder funktionellen Typ.

## Revendications

1. Procédé électrochimique dans lequel on réduit une substance gazeuse à la cathode et dans lequel on utilise en tant que catholytes des micro-émulsions du type huile-dans-eau (huile/eau), lesdites micro-émulsions présentant une conductance électrique par transfert ionique d'au moins 1 millisiemens par $cm^{-1}$.

2. Procédé selon la revendication 1, dans lequel la substance gazeuse est l'oxygène.

3. Procédé selon l'une quelconque des revendications 1 et 2, dans lequel la cathode est fabriquée en un métal généralement utilisé dans les procédés voltamétriques.

4. Procédé selon la revendication 3, dans lequel la cathode est en Au, Pt ou Ni.

5. Procédé selon l'une quelconque des revendications 1 à 4, dans lequel les micro-émulsions huile/eau ayant une conductance d'au moins 1 millisiemens par $cm^{-1}$ sont composées d'un liquide, limpide ou opalescent, uniphase macroscopiquement, obtenu par mélange de:
   a) un liquide aqueux renfermant éventuellement un ou plusieurs électrolytes;
   b) un fluide perfluoropolyéther présentant des groupes terminaux perfluoroalkyles et/ou à fonctionnalité carboxyle, alcool, polyoxyalkylène-OH, ester, amide, etc, et de préférence des groupes fonctionnels de type hydrophile;
   c) un agent tensioactif fluoré, de préférence présentant une structure perfluoropolyéther; et/ou
   d) un alcool hydrogéné en $C_1$ à $C_{12}$ et, le cas échéant, un alcool (partiellement) fluoré (co-surfactant).

6. Procédé selon la revendication 5, dans lequel l'agent tensioactif fluoré est choisi parmi un ou plusieurs des sels suivants:
   a) sels d'acides perfluoroalkylcarboxyliques présentant 5 à 11 atomes de carbone;
   b) sels d'acides perfluorosulfoniques présentant 5 à 11 atomes de carbone;
   c) sels d'acides mono- et dicarboxyliques dérivés de perfluoropolyéthers.

7. Procédé selon la revendication 5, dans lequel l'agent tensioactif fluoré est du type non-ionique substitué par une chaîne perfluoroalkylique et par une extrémité hydrophile polyoxyalkylène.

8. Procédé selon l'une quelconque des revendications 1 à 7, dans lequel l'huile est ou renferme un perfluorocarbone.

9. Procédé selon l'une quelconque des revendications 1 à 7, dans lequel l'huile est ou renferme un ou plusieurs perfluoropolyéthers choisis parmi:
   a) PFPE présentant un poids moléculaire moyen de 500 à 10 000 et de préférence de 600 à 6000, avec des groupes terminaux perfluoroalkyles et appartenant à une ou plusieurs des classes suivantes:
      1)

$$R_fO(\underset{CF_3}{CF}-CF_2O)_n(\underset{CF_3}{CF}O)_m(CF_2O)_pR'_f$$

dans laquelle les unités perfluoro-oxyalkylènes sont distribuées statistiquement et $R_f$ et $R'_f$, identiques ou différents l'un de l'autre, sont des groupes $-CF_3$, $-C_2F_5$ ou $-C_3F_7$, et m, n et p ont des valeurs moyennes telles que l'on respecte les exigences ci-dessus pour ce qui est du poids moléculaire moyen;

2) $R_fO(CF_2CF_2O)_n(CF_2O)_mR'_f$, dans laquelle les unités perfluoro-oxyalkylènes sont distribuées statistiquement, $R_f$ et $R'_f$, identiques ou différents l'un de l'autre, sont des groupes $-CF_3$ ou $-C_2F_5$ et

m et n ont des valeurs moyennes telles qu'elles satisfassent aux exigences ci-dessus relatives au poids moléculaire moyen;

3)

$$R_fO(CF_2CF_2O)_n(CF_2O)_m(\underset{CF_3}{\underset{|}{C}}FO)_p(\underset{CF_3}{\underset{|}{C}}F-CF_2O)_qR'_f$$

dans laquelle les unités perfluoro-oxyalkylènes sont distribuées statistiquement, $R_f$ et $R'_f$, identiques ou différents l'un de l'autre, sont des groupes $-CF_3$, $-C_2F_5$ ou $-C_3F_7$, et m, n, p et q ont des valeurs moyennes telles qu'elles satisfont aux exigences relatives au poids moléculaire moyen;

4)

$$R_fO(\underset{CF_3}{\underset{|}{C}}F-CF_2O)_mR'_f$$

dans laquelle $R_f$ et $R'_f$, identiques ou différents l'un de l'autre, sont des groupes $-C_2F_5$ ou $-C_3F_7$, et n a une valeur moyenne telle que l'on satisfasse aux exigences ci-dessus relatives au poids moléculaire moyen;

5) $R_fO(CF_2CF_2O)_nR'_f$ dans laquelle $R_f$ et $R'_f$, identiques ou différents l'un de l'autre, sont des groupes $-CF_3$ ou $-C_2F_5$, et n a une valeur moyenne telle que l'on satisfasse aux exigences ci-dessus relatives au poids moléculaire moyen;

6) $R_fO(CF_2CF_2CF_2O)_nR'_f$ dans laquelle $R_f$ et $R'_f$, identiques ou différents l'un de l'autre, sont des groupes $-CF_3$, $-C_2F_5$ ou $-C_3F_7$, et n a une valeur moyenne telle que l'on satisfasse aux exigences ci-dessus relatives au poids moléculaire moyen;

7) PFPE présentant la structure de la classe 1) ou de la classe 3, dans laquelle un des groupes terminaux $R_f$ et $R'_f$ comporte un ou deux atomes de chlore;

b) PFPE appartenant aux classes 1) à 7) ci-dessus et présentant un poids moléculaire moyen compris entre 1500 et 10 000, mais comportant en moyenne de 0,1 à 4 extrémités alkyles non-perfluoroalkyles par chaîne polymère:

c) PFPE présentant des groupes fonctionnels ainsi que des chaînes perfluoropolyéthers et des groupes terminaux du type perfluoroalkyle ou fonctionnel.